# FASCICULE DE BREVET EUROPEEN

(11) **EP 1 829 638 B1**
(45) Date de publication et mention de la délivrance du brevet: **26.11.2008**
(21) Numéro de dépôt: 07102613.2
(22) Date de dépôt: 19.02.2007
(51) Int. Cl.: B23C 5/10

(54) **Outil de coupe rotatif comprenant deux portions coupantes à sens de coupe opposés**
Rotierendes Schneidwerkzeug mit zwei Schneidbereichen entgegengesetzter Schnittrichtung
Rotating cutting tool comprising two cutting portions with opposed cutting direction

(30) Priorité: 23.02.2006 FR 0601587
(43) Date de publication de la demande: 05.09.2007
(73) Titulaire: SNECMA, 75015 Paris (FR)
(72) Inventeur: Dessoly, Vincent, 91260 Juvisy (FR)
(74) Mandataire: Poulin, Gérard

(56) Documents cités:
- DE-A1- 10 318 948
- US-A1- 2004 258 490

## Description

La présente invention se rapporte de façon générale au domaine des outils de coupe rotatifs tels que des outils de fraisage, également dénommés fraises.

L'invention concerne également le domaine des procédés d'usinage utilisant de tels outils, en particulier mais non exclusivement les procédés d'usinage mis en oeuvre dans le cadre de constructions aéronautiques. A titre indicatif, il peut notamment s'agir de procédés permettant la réalisation de pièces de moteurs destinés à équiper des aéronefs.

Dans l'art antérieur, les procédés d'usinage visant à obtenir de telles pièces de géométrie complexe nécessitent souvent la mise en oeuvre d'une multitude d'étapes successives d'usinage, et plus particulièrement de plusieurs étapes de fraisage durant lesquelles l'outil utilisé est animé d'un mouvement de coupe circulaire selon son propre axe longitudinal, et la pièce à usiner est animée d'un mouvement relatif d'avance quelconque par rapport à cet outil.

Afin d'optimiser au mieux ce type de procédé, il est connu de l'homme du métier de préférer un usinage en « mode avalant » plutôt qu'en « mode opposition », ces deux modes étant définis d'une part en fonction du sens de rotation de l'outil, lui-même dicté exclusivement par l'orientation des dents hélicoïdales coupantes équipant cet outil, et d'autre part en fonction du sens de la vitesse d'avance relative entre cet outil coupant et la pièce à usiner.

Au vu de ce qui précède, il est clair que pendant la mise en oeuvre du procédé d'usinage d'une pièce, lorsque le sens de vitesse d'avance relative entre l'outil coupant et la pièce est imposé par la géométrie de celle-ci, le fait de désirer travailler préférentiellement en mode avalant impose un sens de rotation de l'outil. Cela peut par conséquent conduire à la nécessité d'employer un outil différent de celui ayant servi à l'étape d'usinage précédente, dans tous les cas où cet outil précédemment utilisé était conçu pour tourner dans le sens de rotation opposé au nouveau sens de rotation requis.

Cette contrainte de changement d'outils durant l'usinage d'une même pièce est bien entendu extrêmement pénalisante en termes de temps et de coûts de production, cet inconvénient étant naturellement d'autant plus contraignant que le nombre d'étapes d'usinage distinctes à effectuer est élevé.

Par ailleurs, lorsque le sens de vitesse d'avance relative entre l'outil coupant et la pièce n'est pas imposé et qu'il peut donc être librement choisi par l'opérateur, en fonction du sens de rotation de l'outil et de manière à pouvoir travailler en mode avalant, il se peut néanmoins que l'effort global de coupe engendré lors de cette étape d'usinage n'entraîne pas de plaquage de la pièce contre les appuis de mise en position classiquement prévus sur la machine, mais au contraire un plaquage de cette même pièce contre des moyens de serrage équipant la machine et complétant les appuis de mise en position.

Cette dernière configuration n'est clairement pas souhaitée, en ce sens qu'elle ne permet pas d'assurer un bon maintien en position de la pièce durant l'usinage, cet inconvénient se traduisant par des pertes en termes de qualité et de précision de coupe.

De ce fait, pour pouvoir travailler en mode avalant et générer par ailleurs un effort global de coupe entraînant un plaquage de la pièce contre les appuis de mise en position et non contre les moyens de serrage, il faudrait ici encore probablement avoir recours à un changement d'outil au profit d'un outil présentant un sens de rotation opposé. Néanmoins, cela reviendrait à s'exposer aux inconvénients mentionnés précédemment, relatifs aux opérations de changement d'outils.

L'invention a donc pour but de proposer un outil de coupe rotatif et un procédé d'usinage remédiant aux problèmes mentionnés ci-dessus relatifs aux réalisations de l'art antérieur.

Pour ce faire, l'invention a pour objet un outil de coupe rotatif s'étendant selon un axe longitudinal et comprenant une première portion coupante comportant une pluralité de premières dents hélicoïdales présentant un sens d'hélice donné et conçues pour travailler dans un premier sens de rotation de l'outil. Selon l'invention, l'outil comporte en outre une seconde portion coupante décalée de la première selon l'axe longitudinal de manière à ce que cette dernière soit située entre la seconde portion coupante et un manchon de l'outil, cette seconde portion coupante comportant une pluralité de secondes dents hélicoïdales présentant comme sens d'hélice le sens d'hélice donné mentionné ci-dessus, ces secondes dents étant conçues pour travailler dans un second sens de rotation de l'outil, opposé au premier.

Ainsi, l'une des particularité de la présente invention est que l'outil coupant, prenant de préférence la forme d'une fraise, dispose de deux portions coupantes distinctes, ce qui permet globalement de réduire le nombre de changement d'outils durant la mise en oeuvre d'un procédé d'usinage nécessitant la réalisation d'une multitude d'étapes d'usinage successives sur une même pièce à usiner.

Il est tout d'abord indiqué que dans les cas où le sens de vitesse d'avance relative entre l'outil coupant et la pièce est imposé par la géométrie de celle-ci, le fait de désirer travailler préférentiellement en mode avalant impose un sens de rotation de l'outil, auquel l'outil selon l'invention peut avantageusement facilement s'adapter. En effet, dans le cas où le nouveau sens de rotation requis est le même qu'à l'étape d'usinage précédente, on continue alors naturellement à travailler avec la portion coupante de l'outil qui vient d'être utilisée, tandis que dans le cas inverse où le nouveau sens de rotation imposé est opposé à celui mis en oeuvre à l'étape d'usinage antérieure, il suffit alors d'employer l'autre portion coupante de l'outil pour s'assurer de travailler en mode avalant durant cette nouvelle étape d'usinage, étant bien entendu rappelé que les deux portions coupantes se situent toutes les deux sous le manchon de l'outil.

Cette spécificité permet donc de limiter considérablement les changements d'outils durant un procédé d'usinage d'une même pièce intégrant une multitude d'étapes d'usinage, cela se traduisant directement par des gains sensibles en termes de temps et de coûts de production.

Par ailleurs, il est noté que dans les autres cas où le sens de vitesse d'avance relative entre l'outil coupant et la pièce n'est pas imposé et qu'il peut donc être librement choisi par l'opérateur, ce libre choix s'ajoute à celui du sens de rotation de l'outil offert par l'outil selon l'invention, grâce à la présence conjointe des deux portions coupante. Ainsi, l'opérateur dispose avantageusement de deux paramètres dont il peut fixer librement la combinaison de manière d'une part à permettre un travail en mode avalant, et d'autre part à assurer que l'effort global de coupe engendré lors de l'étape d'usinage entraîne un plaquage de la pièce contre les appuis de mise en position classiquement prévus sur la machine, et non contre des moyens de serrage équipant la machine et complétant les appuis de mise en position. Comme évoqué ci-dessus, l'avantage lié à l'obtention d'un plaquage de la pièce contre les appuis de mise en position réside dans l'amélioration du maintien de la pièce durant l'usinage, cet avantage se traduisant par une qualité et une précision de coupe accrues.

De préférence, le sens d'hélice donné mentionné précédemment est à droite, également dit « hélice à droite ». Cependant, il pourrait alternativement être prévu un sens d'hélice à gauche pour les premières et secondes dents hélicoïdales coupantes, sans sortir du cadre de l'invention

Préférentiellement, le premier sens de rotation de l'outil associé aux premières dents est le sens horaire en coupe transversale vue d'un manchon de l'outil vers la première portion coupante, ce sens étant également dit « coupe à droite ». Par ailleurs, le second sens de rotation de l'outil associé aux secondes dents est le sens anti-horaire en coupe transversale vue du manchon vers la seconde portion coupante, ce sens étant quant à lui également dit « coupe à gauche ».

Toujours de manière préférentielle, la première portion coupante est espacée de la seconde portion coupante selon l'axe longitudinal par une portion intermédiaire cylindrique de l'outil, ce qui facilite sa réalisation.

Par ailleurs, on prévoit de préférence que la première portion coupante est plus rapprochée d'un manchon de l'outil que ne l'est la seconde portion coupante. Néanmoins, la disposition contraire est également envisagée, sans sortir du cadre de l'invention.

Enfin, l'outil de coupe selon l'invention est préférentiellement un outil de fraisage, à savoir une fraise destinée à permettre des opérations de fraisage durant lesquelles l'outil utilisé est animé d'un mouvement de coupe circulaire selon son propre axe longitudinal, et la pièce à usiner est animée d'un mouvement relatif d'avance quelconque par rapport à cet outil, tel que par exemple un mouvement sensiblement rectiligne ou circulaire.

Par ailleurs, l'invention a également pour objet un procédé d'usinage d'une pièce à l'aide de l'outil de coupe rotatif qui vient d'être présenté et qui est monté sur une machine d'usinage, le procédé comprenant une première étape d'usinage à l'aide de la première portion coupante de l'outil travaillant dans un premier sens de rotation ainsi qu'une seconde étape d'usinage à l'aide de la seconde portion coupante de l'outil travaillant dans un second sens de rotation, ces première et seconde étapes d'usinage étant réalisées successivement en conservant l'outil de coupe rotatif monté sur la machine d'usinage. Par conséquent, l'outil n'est avantageusement pas démonté de la machine entre les deux étapes d'usinage précitées, la seule opération requise entre ces deux dernières étant donc un changement de rotation de l'outil.

De préférence, chacune des première et seconde étapes d'usinage est mise en oeuvre de manière à ce que les première et seconde portions coupantes travaillent en avalant la matière de la pièce à usiner.

Toujours de manière préférentielle, la première étape d'usinage est mise en oeuvre de manière à obtenir un premier sens de vitesse d'avance relative entre l'outil coupant et la pièce à usiner, et la seconde étape d'usinage est mise en oeuvre de manière à obtenir un second sens de vitesse d'avance relative entre l'outil coupant et la pièce à usiner, opposé au premier sens.

Comme mentionné ci-dessus, les première et seconde étapes d'usinage sont préférentiellement des étapes de fraisage.

D'autres avantages et caractéristiques de l'invention apparaîtront dans la description détaillée non limitative ci-dessous.

Cette description sera faite au regard des dessins annexés parmi lesquels ;
- la figure 1 représente une vue de face d'un outil de coupe rotatif selon un mode de réalisation préféré de la présente invention ;
- la figure 2 représente une vue en coupe transversale prise selon la ligne II-II de la figure 1 ;
- la figure 3 représente une vue en coupe transversale prise selon la ligne III-III de la figure 1 ;
- les figures 4 et 5 schématisent deux étapes successives d'un procédé d'usinage selon un mode de réalisation préféré de la l'invention, mis en oeuvre à l'aide de l'outil montré sur les figures 1 à 3 ; et
- la figure 6 schématise une étape d'usinage mise en oeuvre lors d'un procédé utilisant l'outil de coupe montré sur les figures 1 à 3.

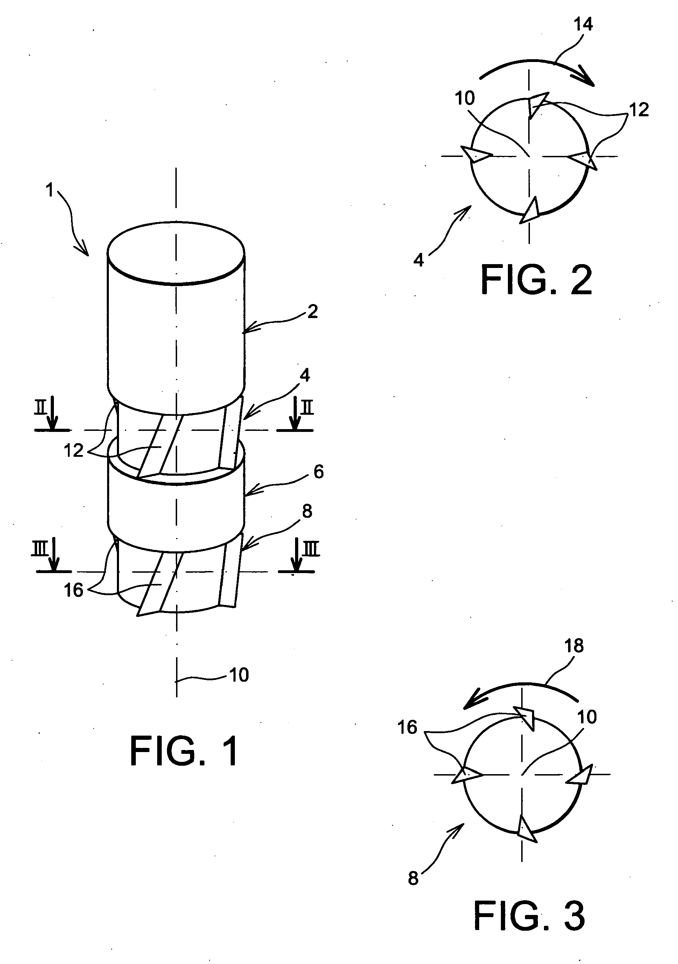

En référence tout d'abord aux figures 1 à 3, on peut apercevoir un outil de fraisage 1 selon un mode de réalisation préféré de la présente invention.

Globalement, cet outil 1 présente, de haut en bas, un manchon 2 prévu pour le montage de cet outil sur une machine d'usinage appropriée (non représentée), une première portion coupante 4, une portion intermédiaire cylindrique 6, et enfin une seconde portion coupante 8. Naturellement, tous ces éléments sont agencés selon un axe longitudinal de l'outil, référencé 10 sur les figures, qui correspond également à un axe de rotation de cet outil.

La première portion coupante 4 est équipée d'une pluralité de dents hélicoïdales coupantes 12, ces dernières disposant d'un sens d'hélice donné, préférentiellement choisi de manière à ce que il soit à droite. A titre indicatif, il est rappelé qu'une « hélice à droite » est telle que dans deux coupes transversales successives de la première portion coupante 4, en allant du manchon 2 vers l'extrémité de coupe de l'outil, les premières dents 12 sont déplacées dans le sens horaire. Ces premières dents 12 sont conçues pour travailler dans un premier sens de rotation de l'outil, qui correspond en coupe transversale telle que montrée sur la figure 2 au sens horaire, lorsque cette coupe est vue du manchon 2 vers cette première portion coupante 4. A titre indicatif, ce sens horaire est également dénommé « coupe à droite », et est représenté schématiquement sur cette figure 2 par la flèche référencée 14.

D'autre part, la seconde portion coupante 8 est quant à elle équipée de secondes dents hélicoïdales coupantes 16 disposant du même sens d'hélice donné, c'est-à-dire hélice à droite, tout en présentant un second sens de rotation opposé au premier sens 14 indiqué ci-dessus. En effet, ce second sens de rotation montré schématiquement sur la figure 3 par la flèche 18, est tel qu'en coupe transversale vue du manchon vers cette seconde portion coupante 8, il correspond au sens anti-horaire.

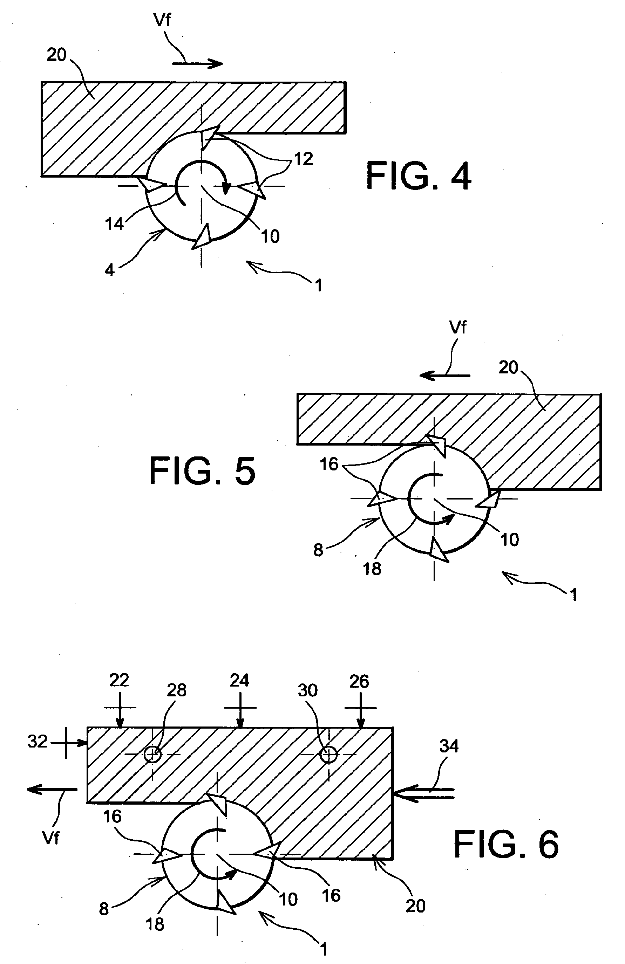

En référence à présent aux figures 4 et 5, il est respectivement schématisé différentes étapes d'un procédé d'usinage selon la présente invention, ce procédé étant mis en oeuvre à l'aide de l'outil 1 qui vient d'être présenté.

Sur la figure 4, on peut apercevoir une première étape d'usinage d'une pièce 20, cette première étape étant réalisée à l'aide de la première portion coupante 4, c'est-à-dire en mettant l'outil 1 en rotation dans le sens horaire 14. Afin de travailler en mode avalant, le sens de la vitesse d'avance relative Vf entre l'outil 1 et la pièce 20 est fixé comme montré sur la figure 4, c'est-à-dire en faisant en sorte que la pièce 20 se déplace vers la droite par rapport à l'outil 1 en vue de dessus.

Pour effectuer la seconde étape d'usinage montrée schématiquement sur la figure 5, l'outil est maintenu en position sur la machine d'usinage (non représentée), et ce même outil est mis en rotation dans un sens opposé à celui employé lors de la première étape schématisée sur la figure 4. Par conséquent, cette seconde étape est mise en oeuvre à l'aide de la seconde portion coupante 8 tournant dans le sens anti-horaire 18. Par ailleurs, toujours afin de travailler dans le mode avalant préféré du fait de la qualité d'usinage qu'il permet de procurer, le sens de la vitesse d'avance relative Vf entre l'outil 1 et la pièce 20 à usiner est alors inversé par rapport à celui rencontré lors de la première étape, à savoir que la pièce 20 se déplace à présent vers la gauche par rapport à l'outil 1 en vue de dessus comme montré sur la figure 5. A ce titre, il est indiqué que cette vitesse d'avance relative entre ces deux éléments peut être obtenue en mettant en mouvement l'une quelconque de ces deux entités 1, 20, comme cela est bien connu de l'homme du métier.

Ainsi, comme cela était indiqué ci-dessus, on peut voir que lorsque le sens de la vitesse d'avance relative Vf est imposé par la géométrie de la pièce 20 à usiner, géométrie qui peut par ailleurs être relativement complexe, il suffit alors de choisir la portion coupante des deux qui permettra, du fait de la disposition particulière des dents qu'il intègre, de travailler dans le mode préféré avalant. A ce titre, comme cela est bien connu de l'homme du métier, il est rappelé que la différence entre les premières dents hélicoïdales dites « coupe à droite » et les secondes dents hélicoïdales dites « coupe à gauche », ces deux ensembles de dents étant d'ailleurs chacun à hélice à droite, réside tout simplement dans l'orientation de la tranche coupante de ces dents.

L'avantage résultant de la mise en oeuvre du procédé qui vient d'être décrit consiste donc à ne pas à avoir à démonter l'outil 1 de la machine entre les deux étapes d'usinage successives.

En référence à présent à la figure 6, il est schématisé la mise en oeuvre d'une étape d'usinage pratiquée lors de la réalisation d'un autre procédé. Sur cette figure 6, on peut voir le montage isostatique permettant la fixation de la pièce 20 à usiner sur la machine d'usinage, ce montage comprenant globalement un appui plan constitué par les trois appuis fixes 22, 24, 26, un appui linéaire rectiligne constitué par les deux appuis fixes 28, 30, un appui ponctuel constitué par l'appui fixe 32, et enfin, des moyens de serrage 34 permettant la fixation de la pièce et étant globalement situés en face des appuis fixes précités.

Sur cette figure 6, on peut voir que le sens de la vitesse d'avance relative Vf ainsi que la portion coupante de l'outil 1 ont été conjointement choisis de manière d'une part à obtenir un travail en mode avalant, mais également de manière à obtenir un effort global de coupe, référencé par la flèche Fc sur la figure 6, dirigé vers les appuis du montage isostatique précité. Cela permet globalement d'obtenir un plaquage de la pièce 20 contre ces mêmes appuis de mise en position prévus sur la machine, et non contre les moyens de serrage 34. Il en résulte alors une amélioration du maintien de la pièce lors de l'usinage, ce qui se traduit principalement par une qualité et une précision de coupe accrues. A titre indicatif, il est noté que dans le cas particulier représenté sur la figure 6, c'est la seconde portion coupante 8 qui est utilisée de manière à obtenir une coupe à gauche, c'est-à-dire de façon à faire tourner l'outil 1 dans le sens anti-horaire 18. D'autre part, le sens de la vitesse d'avance relative Vf entre l'outil 1 et la pièce 20 à usiner a parallèlement été choisi de manière à ce que cette même pièce 20 se déplace vers la gauche par rapport à l'outil 1 en vue de dessus, comme montré sur la figure 6.

Bien entendu, diverses modifications peuvent être apportées par l'homme du métier à l'invention qui vient d'être décrite, uniquement à titre d'exemples non limitatifs.

## Revendications

1. Outil de coupe rotatif (1) s'étendant selon un axe longitudinal (10) et comprenant une première portion coupante (4) comportant une pluralité de premières dents hélicoïdales (12) présentant un sens d'hélice donné et conçues pour travailler dans un premier sens de rotation de l'outil (14),
**caractérisé en ce qu'**il comporte en outre une seconde portion coupante (8) décalée de la première selon l'axe longitudinal (10) de manière à ce que cette dernière soit située entre ladite seconde portion coupante (8) et un manchon (2) de l'outil, ladite seconde portion coupante (8) comportant une pluralité de secondes dents hélicoïdales (16) présentant comme sens d'hélice ledit sens d'hélice donné, et conçues pour travailler dans un second sens de rotation de l'outil (18), opposé au premier.

2. Outil de coupe (1) selon la revendication 1, **caractérisé en ce que** ledit sens d'hélice donné est à droite.

3. Outil de coupe (1) selon la revendication 1 ou la revendication 2, **caractérisé en ce que** ledit premier sens de rotation de l'outil (14) associé aux premières dents (12) est le sens horaire en coupe transversale vue dudit manchon (2) de l'outil vers ladite première portion coupante (4), et **en ce que** ledit second sens de rotation de l'outil (18) associé aux secondes dents (16) est le sens anti-horaire en coupe transversale vue du manchon (2) vers ladite seconde portion coupante (8).

4. Outil de coupe (1) selon l'une quelconque des revendications précédentes, **caractérisé en ce que** ladite première portion coupante (4) est espacée de la seconde portion coupante (8) selon l'axe longitudinal (10) par une portion intermédiaire cylindrique (6) de l'outil.

5. Outil de coupe (1) selon l'une quelconque des revendications précédentes, **caractérisé en ce que** ladite première portion coupante (4) est plus rapprochée dudit manchon (2) de l'outil que ne l'est ladite seconde portion coupante (8).

6. Outil de coupe (1) selon l'une quelconque des revendications précédentes, **caractérisé en ce qu'**il est un outil de fraisage.

7. Procédé d'usinage d'une pièce (20) à l'aide de l'outil de coupe rotatif (1) selon l'une quelconque des revendications précédentes monté sur une machine d'usinage, le procédé comprenant une première étape d'usinage à l'aide de ladite première portion coupante (4) de l'outil travaillant dans un premier sens de rotation ainsi qu'une seconde étape d'usinage à l'aide de ladite seconde portion coupante (8) de l'outil travaillant dans un second sens de rotation, ces première et seconde étapes d'usinage étant réalisées successivement en conservant ledit outil de coupe rotatif (1) monté sur la machine d'usinage.

8. Procédé d'usinage selon la revendication 7, **caractérisé en ce que** chacune des première et seconde étapes d'usinage est mise en oeuvre de manière à ce que les première et seconde portions coupantes (4, 8) travaillent en avalant la matière de la pièce (20) à usiner.

9. Procédé d'usinage selon la revendication 7 ou la revendication 8, **caractérisé en ce que** ladite première étape d'usinage est mise en oeuvre de manière à obtenir un premier sens de vitesse d'avance relative (Vf) entre ledit outil coupant (1) et la pièce (20) à usiner, et **en ce que** ladite seconde étape d'usinage est mise en oeuvre de manière à obtenir un second sens de vitesse d'avance relative (Vf) entre ledit outil coupant (1) et la pièce (20) à usiner, opposé audit premier sens.

10. Procédé d'usinage selon l'une quelconque des revendications 7 à 9, **caractérisé en ce que** lesdites première et seconde étapes d'usinage sont des étapes de fraisage.

## Claims

1. A rotary cutting tool (1) extending along a longitudinal axis (10) and comprising a first cutting portion (4) including a plurality of first helical teeth (12) having a given helix direction and being designed to work in a first direction of rotation of the tool (14), wherein said tool additionally includes a second cutting portion (8) offset from the first along the longitudinal axis (10) such that said first cutting portion is situated between said second cutting portion (8) and a sleeve (2) of the tool, said second cutting portion (8) including a plurality of second helical teeth (16) having, as helix direction, said given helix direction and being designed to work in a second direction of rotation of the tool (18), opposed to the first.

2. The cutting tool (1) as claimed in claim 1, wherein said given helix direction is right-handed.

3. The cutting tool (1) as claimed in claim 1 or 2, wherein said first direction of rotation of the tool (14) associated with the first teeth (12) is the clockwise direction in cross section as viewed from the sleeve (2) of the tool toward said first cutting portion (4), and wherein said second direction of rotation of the tool (18) associated with the second teeth (16) is the counterclockwise direction in cross section as viewed from the sleeve (2) toward said second cutting portion (8).

4. The cutting tool (1) as claimed in any one of the preceding claims, wherein said first cutting portion (4) is spaced apart from the second cutting portion (8) along the longitudinal axis (10) by a cylindrical intermediate portion (6) of the tool.

5. The cutting tool (1) as claimed in any one of the preceding claims, wherein said first cutting portion (4) is closer to a sleeve (2) of the tool than is said second cutting portion (8).

6. The cutting tool (1) as claimed in any one of the preceding claims, wherein said tool is a milling tool.

7. A method of machining a workpiece (20) using the rotary cutting tool (1) as claimed in any one of the preceding claims mounted on a machine tool, the method comprising a first machining step using said first cutting portion (4) of the tool working in a first direction of rotation and also a second machining step using said second cutting portion (8) of the tool working in a second direction of rotation, these first and second machining steps being carried out successively while keeping said rotary cutting tool (1) mounted on the machine tool.

8. The machining method as claimed in claim 7, wherein each of the first and second machining steps is implemented in such a way that the first and second cutting portions (4, 8) work in climb mode the material of the workpiece (20) to be machined.

9. The machining method as claimed in claim 7 or claim 8, wherein said first machining step is implemented in such a way as to obtain a first direction of relative feed (Vf) between said cutting tool (1) and the workpiece (20) to be machined, and wherein said second machining step is implemented in such a way as to obtain a second direction of relative feed (Vf) between said cutting tool (1) and the workpiece (20) to be machined, opposed to said first direction.

10. The machining method as claimed in any one of claims 7 to 9, wherein said first and second machining steps are milling steps.

## Patentansprüche

1. Rotierendes Schneidwerkzeug (1), das sich nach einer Längsachse (10) erstreckt und einen ersten Schneidabschnitt (4) mit einer Vielzahl von ersten schraubenförmigen Zähnen (12) aufweist, die eine gegebene Helixrichtung aufweisen und dafür konzipiert sind, in einer ersten Drehrichtung (14) des Werkzeugs zu arbeiten,
**dadurch gekennzeichnet, daß** es ferner einen zweiten Schneidabschnitt (8) aufweist, der von dem ersten nach der Längsachse (10) derart versetzt ist, daß dieser zwischen dem zweiten Schneidabschnitt (8) und einer Muffe (2) des Werkzeugs liegt, wobei der zweite Schneidabschnitt (8) eine Vielzahl von zweiten schraubenförmigen Zähnen (16) aufweist, die als Helixrichtung die gegebene Helixrichtung aufweisen und dafür konzipiert sind, in einer zweiten, der ersten entgegengesetzten Drehrichtung (18) des Werkzeugs zu arbeiten.

2. Schneidwerkzeug (1) nach Anspruch 1, **dadurch gekennzeichnet, daß** die gegebene Helixrichtung rechtsgängig ist.

3. Schneidwerkzeug (1) nach Anspruch 1 oder Anspruch 2, **dadurch gekennzeichnet, daß** die erste, den ersten Zähnen (12) zugeordnete Drehrichtung (14) des Werkzeugs der Uhrzeigersinn im Querschnitt gesehen von der Muffe (2) des Werkzeugs zu dem ersten Schneidabschnitt (4) ist, und daß die zweite, den zweiten Zähnen (16) zugeordnete Drehrichtung (18) des Werkzeugs der Gegenuhrzeigersinn im Querschnitt gesehen von der Muffe (2) des Werkzeugs zu dem zweiten Schneidabschnitt (8) ist.

4. Schneidwerkzeug (1) nach einem der vorhergehenden Ansprüche, **dadurch gekennzeichnet, daß** der erste Schneidabschnitt (4) von dem zweiten Schneidabschnitt (8) nach der Längsachse (10) durch einen zylindrischen Zwischenabschnitt (6) des Werkzeugs beabstandet ist.

5. Schneidwerkzeug (1) nach einem der vorhergehenden Ansprüche, **dadurch gekennzeichnet, daß** der erste Schneidabschnitt (4) der Muffe (2) des Werkzeugs näher als der zweite Schneidabschnitt (8) ist.

6. Schneidwerkzeug (1) nach einem der vorhergehenden Ansprüche, **dadurch gekennzeichnet, daß** es ein Fräswerkzeug ist.

7. Verfahren zur Bearbeitung eines Werkstücks (20) mit Hilfe des rotierenden Schneidwerkzeugs (1) nach einem der vorhergehenden Ansprüche, das an einer Bearbeitungsmaschine angebracht ist, wobei das Verfahren einen ersten Bearbeitungsschritt mit Hilfe des ersten Schneidabschnitts (4) des Werkzeugs, der in einer ersten Drehrichtung arbeitet, sowie einen zweiten Bearbeitungsschritt mit Hilfe des zweiten Schneidabschnitts (8) des Werkzeugs umfaßt, der in einer zweiten Drehrichtung arbeitet, wobei dieser erste und zweite Bearbeitungsschritt nacheinander durchgeführt werden, wobei das Drehschneidwerkzeug (1) an der Bearbeitungsmaschine angebracht gehalten wird.

8. Bearbeitungsverfahren nach Anspruch 7, **dadurch gekennzeichnet, daß** sowohl der erste als auch der zweite Bearbeitungsschritte derart durchgeführt werden, daß der erste und der zweite Schneidabschnitt (4, 8) arbeiten, indem das Material des zu bearbeitenden Werkstücks (20) abgetragen wird.

9. Bearbeitungsverfahren nach Anspruch 7 oder Anspruch 8, **dadurch gekennzeichnet, daß** der erste Bearbeitungsschritt derart durchgeführt wird, daß eine erste Relativvorschubgeschwindigkeitsrichtung (Vf) zwischen dem Schneidwerkzeug (1) und dem zu bearbeitenden Werkstück (20) erhalten wird, und daß der zweite Bearbeitungsschritt derart durchgeführt wird, daß eine zweite Relativvorschubgeschwindigkeitsrichtung (Vf) zwischen dem Schneidwerkzeug (1) und dem zu bearbeitenden Werkstück (20) erhalten wird, die der ersten entgegengesetzt ist.

10. Bearbeitungsverfahren nach einem Ansprüche 7 bis 7, **dadurch gekennzeichnet, daß** der erste und der zweite Bearbeitungsschritt Frässchritte sind.
